# EUROPEAN PATENT APPLICATION

(11) **EP 2 960 778 A1**
(43) Date of publication of application: **30.12.2015**
(21) Application number: 15172229.5
(22) Date of filing: 16.06.2015
(51) Int. Cl.: G06F 3/06

(54) **A STORAGE ABSTRACTION LAYER AND A SYSTEM AND A METHOD THEREOF**

(30) Priority: 23.06.2014 US 201462015995 P; 09.06.2015 US 201514734974
(71) Applicant: Synchronoss Technologies, Inc., Bridgewater, NJ 08807 (US)
(72) Inventor: Hannaway, Robert, Bryanstown, Drogheda (IE); Lennon, Patrick, Dublin, 2 (IE)
(74) Representative: Goddar, Heinz J.

(57) **Abstract**

Embodiments of the present invention are directed to a storage abstraction layer that is a concatenation of a plurality of storage devices that is accessible by a computing device. The plurality of storage devices includes at least one attached storage of the computing device, at least one cloud storage, or a combination thereof. The storage abstraction layer is presented as an application programming interface (API) to applications running on the computing device to allow each application to store and retrieve data as if it was using a single storage, regardless of where each of the plurality of storage devices is located and the type of each of the plurality of storage devices. Access to individual objects or files on this layer is done transparently such that underlying implementation details are hidden from the calling application.

## Description

### Related Applications

This application claims benefit of priority under 35 U.S.C. section 119(e) of the copending United States Provisional Patent Application Serial No. 62/015,995, filed June 23, 2014, entitled "Mobile Abstraction Layer," which is hereby incorporated by reference in its entirety.

### Field of Invention

The present invention relates to storage mediums. More particularly, the present invention relates to a storage abstraction layer and a system and a method thereof.

### Background of the Invention

Device storage for mobile devices is fragmented in terms of removable storage, internal memory and cloud storage. Currently, accessing the device storage incurs a coding overhead to compensate for the different on-device and off-device storage devices. This overhead increases computation time, memory, bandwidth and/or other resources, which affects performance. The present invention addresses at least these limitations in the prior art.

### Brief Summary of the Invention

Embodiments of the present invention are directed to a storage abstraction layer that is a concatenation of a plurality of storage devices that is accessible by a computing device. The plurality of storage devices includes at least one attached storage of the computing device, at least one cloud storage, or a combination thereof. The storage abstraction layer is presented as an application programming interface (API) to applications running on the computing device to allow each application to store and retrieve data as if it was using a single storage, regardless of where each of the plurality of storage devices is located and the type of each of the plurality of storage devices. Access to individual objects or files on this layer is done transparently such that underlying implementation details are hidden from the calling application.

In one aspect, a wireless communication device is provided. The wireless communication device includes a processor, at least one application executed by the processor, wherein the at least one application generates application data, and a storage abstraction layer interfacing between the at least one application and a plurality of storage devices accessible by the wireless communication device. The storage abstraction layer includes an application programming interface (API) presented to and used by the at least one application to store the application data across one or more of the plurality of storage devices, and a map specifying which one of the plurality of storage each portion of the application data is written to.

In some embodiments, the plurality of storage devices includes at least one local storage device, at least one cloud storage or a combination thereof.

In some embodiments, the wireless communication device also includes a network interface communicatively coupled with the at least one cloud storage.

In some embodiments, the wireless communication device also includes a locus for receiving the at least one local storage device.

In some embodiments, the storage abstraction layer interacts with an user interface (UI).

In some embodiments, the UI allows the user to identify the at least one cloud storage and access information to the at least one cloud storage.

In some embodiments, the storage abstraction layer includes a priority list of storage locations.

In some embodiments, the UI allows a user to program the priority list of storage locations, wherein the priority list of storage locations specifies where the application data will be stored first.

In another aspect, a method includes at least one application generating application data, a storage abstraction layer receiving the application data, the storage abstraction layer writing the application data to a plurality of storage devices according to a priority list of storage locations, and the storage abstraction layer updating a map with information regarding which one of the plurality of storage devices each portion of the application data is written to.

In some embodiments, the at least one application and the storage abstraction layer co-reside on a computing device.

In some embodiments, the plurality of storage devices include at least one local storage device, at least one cloud storage or a combination thereof.

In some embodiments, each portion of the application data is of the same size. Alternatively, each portion of the application can be of different sizes.

In some embodiments, the method further includes the storage abstraction layer determining the priority list of storage locations.

In some embodiments, the method further includes the storage abstraction layer receiving the priority list of storage locations as input.

In some embodiments, the method further includes the storage abstraction layer reconstructing the application data.

In some embodiments, the method further includes the storage abstraction layer receiving access information as input, and using the access information to access the at least one cloud storage during the writing step and the reconstructing step.

In some embodiments, the method further includes presenting to a user that at least a portion of the application data is currently unavailable for viewing.

In some embodiments, the method further includes the storage abstraction layer writing a first portion of the application data to one of the storage locations when another of the storage locations is unavailable, wherein the another of the storage locations has a higher priority than the one of the storage locations, and the storage abstraction layer writing the first portion of the application data to the another of the storage locations when the another of the storage locations becomes available.

In some embodiments, the one of the storage locations is local to the computing device, and the another of the storage location is remote from the computing device.

In some embodiments, the method further includes storing the map on the computing device.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Figure 1 illustrates an exemplary system in accordance with some embodiments.
Figure 2 illustrates a block diagram of an exemplary computing device according to some embodiments.
Figure 3 illustrates an exemplary method in accordance with some embodiments.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention are directed to a storage abstraction layer that is a concatenation of a plurality of storage devices that is accessible by a computing device. The plurality of storage devices includes at least one attached storage of the computing device, at least one cloud storage, or a combination thereof. The storage abstraction layer is presented as an application programming interface (API) to applications running on the computing device to allow each application to store and retrieve data as if it was using a single storage, regardless of where each of the plurality of storage devices is located and the type of each of the plurality of storage devices. Access to individual objects or files on this layer is done transparently such that underlying implementation details are hidden from the calling application.

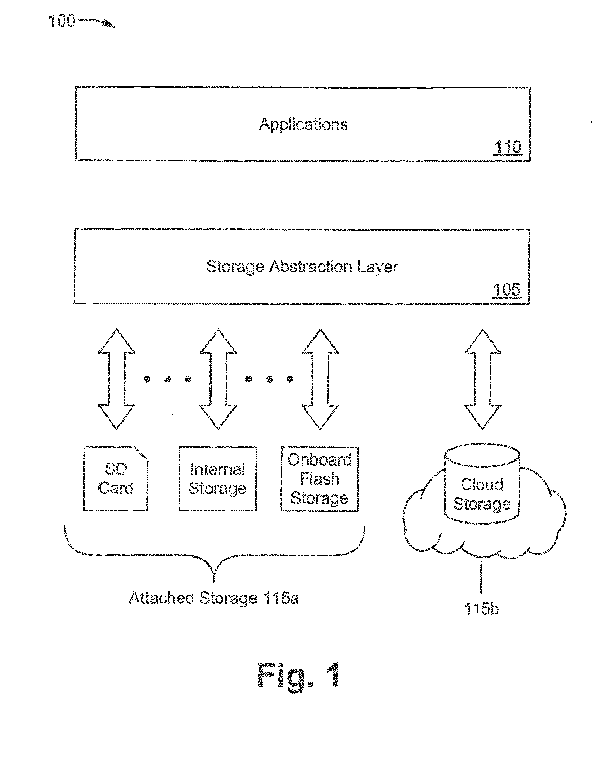

Figure 1 illustrates an exemplary system 100 in accordance with some embodiments. The system 100 includes a storage abstraction layer 105 that interfaces between one or more applications 110 and a plurality of storage devices 115. The storage abstraction layer 105 and the one or more applications 110 co-reside on a computing device. An exemplary application 110 on the computing device is an address book application, a camera application, a memo application or the like. The plurality of storage devices 115 includes at least one attached storage device 115a of the computing device, at least one cloud storage 115b, or a combination thereof. An exemplary attached storage device 115a is a secure digital (SD) card, an internal storage, an onboard flash storage or the like of the computing device. A cloud storage 115b is provided by a cloud service. An exemplary cloud storage 115b is the DROPBOX cloud storage. Application data can be stored in one of the plurality of storage devices 115 or across at least two of the plurality of storage devices 115. A user typically interacts with the applications 110 as the user would normally interact. Each of the applications 110 communicates with the storage abstraction layer 105 without user knowledge, intervention or both to access application data.

The storage abstraction layer 105 calculates the available space across all of the plurality of storage devices 115. In some embodiments, the storage abstraction layer 105 can make an ad-hoc determination of a priority list of storage locations where application data for each application is stored first. This determination can be based on factors such the amount of space available at each of the plurality of storage devices 115 and what the calling application is. Other factors, such as whether there is connectivity to a cloud storage, are contemplated. In some embodiments, the storage abstraction layer 105 includes a preprogrammed priority list of storage locations where application data for each application will be stored first. In some embodiments, the storage abstraction layer 105 interacts with an user interface (UI) that allows a user to program the priority list of storage locations where application data for each application will be stored first. The UI also allows the user to identify the cloud storage(s) 115b and provide access information to those cloud storage(s) 115b. In some embodiments, the UI is a part of an application or a settings panel on the computing device.

The priority list of storage locations for a first application on the computing device can be the same as or different from the priority list of storage locations for a second application on the computing device. For example, the priority list storage locations for application data of the camera application can be first the SD card of the computing device and then the cloud storage, while the priority list storage locations of application data of the address book application can be first the internal storage of the computing device and then the cloud storage.

It is possible that application data is stored at one storage location (e.g., contiguous file) if that storage device has sufficient memory space available. For example, if the SD card has sufficient memory space available, then a video taken by the camera of the computing device will be stored on the SD card. It is possible that application data is stored at two or more storage locations (e.g., fragmented file). For example, if the SD card does not have sufficient memory space available to store a first portion of the video, then the first portion of the video is stored on the SD card and another portion(s) of the video is stored in other storage device(s), such as the another portion of the video is stored in the cloud storage.

If the computing device does not have connectivity with a storage device (e.g., a cloud storage), because there is no network communication or because the service is down, then the next storage device from the priority list of storage locations is used. Continuing with the previous example, if the cloud storage is not available, then the another portion(s) of the video is stored in the internal storage of the computing device. In some embodiments, when the storage device that was previously unavailable becomes available, the another portion(s) is seamlessly transferred to that now available storage device with or without user knowledge.

The storage abstraction layer includes a map specifying where each portion of application data is stored at. When an application access its application data, the storage abstraction layer references the map to retrieve each portion of the application data. In some embodiment, each portion or fragment of application data is of the same size such that even if a storage device has sufficient memory space to store more than one portion of the application data, only one portion of the application data is written to that storage device.

When the video is being played back to the video, for example, the video "reconstructed" from the multiple portions of the application data during playback will appear to the user as a single video stream. In some embodiments, when a portion of the application data cannot be retrieved because the corresponding source is unavailable, the user is prompted with an unavailable/try later message. In some embodiments, the map is stored in an attached storage device 115a of the computing device. Alternatively, the map is stored at a remote location, such as in a cloud storage115b.

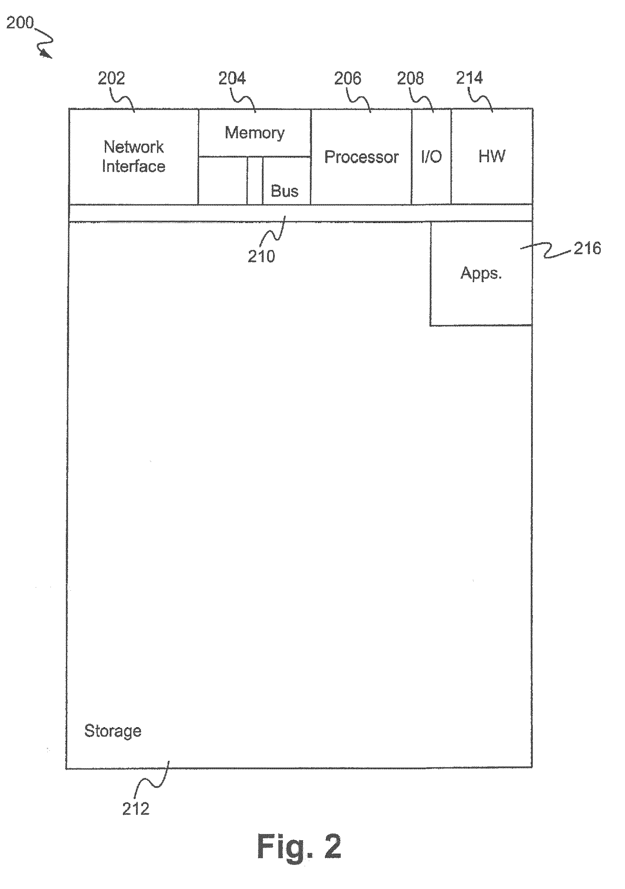

Figure 2 illustrates a block diagram of an exemplary computing device 200 according to some embodiments. The computing device 200 is able to be used to acquire, cache, store, compute, search, transfer, communicate and/or display information.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card (e.g., SD Card), RAM, ROM, EPROM, EEPROM and/or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Application(s) 214, such as an address book application, a camera application, and a memo application, are likely to be stored in the storage device 212 and memory 204 and are processed by the processor 206. More or less components or modules shown in Figure 2 are able to be included in the computing device 200. For example, the computing device 200 can include a SIM (subscriber identity module) card connected to a mobile network. For another example, the computing device 200 can include a camera module for taking pictures and videos.

The computing device 200 can be a server or an end-user device. Exemplary end-user devices include, but are not limited to, a tablet, a mobile phone, a smart phone, a desktop computer, a laptop computer, a netbook, or any suitable computing device such as special purpose devices, including set top boxes and automobile consoles.

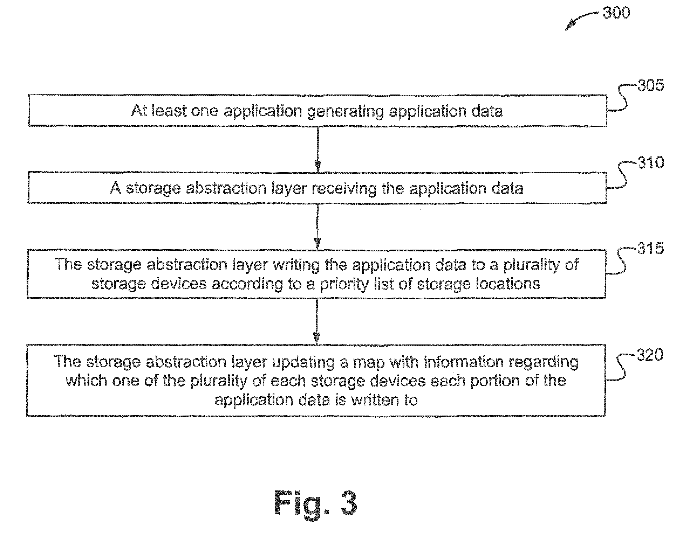

Figure 3 illustrates an exemplary method 300 in accordance with some embodiments. At a step 305, at least one application generates application data. An exemplary application is a camera application that is taking a video (e.g., application data). At a step 310, a storage abstraction layer receives the application data that is generated by the at least one application. In some embodiments, the at least one application and the storage abstraction layer co-reside on a computing device. An exemplary computing device is a wireless communication device, such as a mobile phone.

At a step 315, the storage abstraction layer writes the application data to a plurality of storage devices according to a priority list of storage locations. The plurality of storage devices includes at least one local storage device, at least one cloud storage or a combination thereof. In some embodiments, prior to the step 315, the storage abstraction layer determines the priority list of storage locations. This determination can be based on factors such the amount of space available at each of the plurality of storage devices 115 and what the at least one application is. Alternatively, the storage abstraction layer receives the priority list of storage locations as input from a user via a user interface.

Based on the priority list of storage locations, the storage abstraction layer will write a first portion of the application data to one of the storage locations when another of the storage locations is unavailable, where the another of the storage locations has a higher priority than the one of the storage locations. However, the storage abstraction layer will write the first portion of the application data to the another of the storage locations when the another of the storage locations becomes available. In some embodiments, the one of the storage location is local to the computing device (e.g., an attached storage device), and the another of the storage location is remote from the computing device (e.g., a cloud storage).

At a step 320, the storage abstraction layer updates a map with information regarding which one of the plurality of storage devices each portion of the application data is written to. In some embodiments, each portion of the application data is of the same size. Alternatively, each portion of the application data is of a different size. The map can be locally stored on the computing device or remotely stored on the network. When a portion of the application data is moved from storage location to another storage location (such as when the another storage location becomes available, e.g., network connectivity, enough available space, etc.), the map is automatically updated to reflect the new location.

After the application data is written to the plurality of storage devices, the storage abstraction layer is able to reconstruct the application data during playback at a later time. The storage abstraction layer is able to receive access information as input from the user via the same as or different user interface from before, and use the access information to access the at least one cloud storage when the application data is written and reconstructed. When at least a portion of the application data is unavailable for viewing, the user is presented with message indicating such.

The storage abstraction layer is presented as an application programming interface (API) to each of the applications which is used as a type of file system/object store, which thereby hides the underlying implementation from the calling application. In other words, the storage abstraction layer allows each application to store and retrieve application data as if it was using a single data store.

A computing device typically includes a plurality of storage mediums, such as internal device storage and a removable SD card. A computing device can also include one or more proprietary content providers. Each proprietary content provider is able to store and retrieve data specific to itself. An exemplary proprietary content provider is a contacts provider, which exposes an underlying database to access contacts stored on the computing device. In some embodiments, the storage abstraction layer interacts with each proprietary content provider, treating it as a local storage or cloud storage. In effect, the storage abstraction layer uses an operating system exposed storage medium, either directly accessing the files system or indirectly via a content provider.

One of ordinary skill in the art will realize other uses and advantages also exist. While the invention has been described with reference to numerous specific details, one of ordinary skill in the art will recognize that the invention can be embodied in other specific forms without departing from the spirit of the invention. Thus, one of ordinary skill in the art will understand that the invention is not to be limited by the foregoing illustrative details, but rather is to be defined by the appended claims.

## Claims

1. A wireless communication device comprising:
a processor;
at least one application executed by the processor, wherein the at least one application generates application data; and
a storage abstraction layer interfacing between the at least one application and a plurality of storage devices accessible by the wireless communication device, wherein the storage abstraction layer includes:
an application programming interface (API) presented to and used by the at least one application to store the application data across one or more of the plurality of storage devices; and
a map specifying which one of the plurality of storage each portion of the application data is written to.

2. The wireless communication device of Claim 1, wherein the plurality of storage devices includes at least one local storage device, at least one cloud storage or a combination thereof.

3. The wireless communication device of Claim 2, further comprising at least one of a network interface communicatively coupled with the at least one cloud storage and a locus for receiving the at least one local storage device.

4. The wireless communication device of Claim 2, wherein the storage abstraction layer interacts with an user interface (UI), wherein the UI allows the user to identify the at least one cloud storage and access information to the at least one cloud storage.

5. The wireless communication device of Claim 4, wherein the storage abstraction layer includes a priority list of storage locations.

6. The wireless communication device of Claim 4, wherein the UI allows a user to program the priority list of storage locations, wherein the priority list of storage locations specifies where the application data will be stored first.

7. A method comprising:
at least one application generating application data;
a storage abstraction layer receiving the application data;
the storage abstraction layer writing the application data to a plurality of storage devices according to a priority list of storage locations; and
the storage abstraction layer updating a map with information regarding which one of the plurality of storage devices each portion of the application data is written to.

8. The method of Claim 7, wherein the at least one application and the storage abstraction layer co-reside on a computing device, and wherein the plurality of storage devices include at least one local storage device, at least one cloud storage or a combination thereof.

9. The method of Claim 8, wherein each portion of the application data is of the same size.

10. The method of Claim 8, further comprising the storage abstraction layer determining the priority list of storage locations.

11. The method of Claim 8, further comprising the storage abstraction layer receiving the priority list of storage locations as input.

12. The method of Claim 8, further comprising:
the storage abstraction layer reconstructing the application data;
the storage abstraction layer receiving access information as input, and using the access information to access the at least one cloud storage during the writing step and the reconstructing step; and
presenting to a user that at least a portion of the application data is currently unavailable for viewing.

13. The method of Claim 8, further comprising:
the storage abstraction layer writing a first portion of the application data to one of the storage locations when another of the storage locations is unavailable, wherein the another of the storage locations has a higher priority than the one of the storage locations; and
the storage abstraction layer writing the first portion of the application data to the another of the storage locations when the another of the storage locations becomes available.

14. The method of Claim 13, wherein the one of the storage locations is local to the computing device, and the another of the storage location is remote from the computing device.

15. The method of Claim 8, further comprising storing the map on the computing device.
